# EUROPÄISCHE PATENTANMELDUNG

(11) **EP 2 336 748 A1**
(43) Veröffentlichungstag der Anmeldung: **22.06.2011**
(21) Anmeldenummer: 09179843.9
(22) Anmeldetag: 18.12.2009
(51) Int. Cl.: G01N 21/31, G01N 33/00

(54) **Vorrichtung und Verfahren zur Messung des Quecksilbergehalts in einem Gas**

(71) Anmelder: SICK MAIHAK GmbH, 79183 Waldkirch (DE)
(72) Erfinder: Disch, Rolf, 79356 Eichstetten (DE)
(74) Vertreter: Ludewigt, Christoph

(57) **Zusammenfassung**

Die Erfindung betrifft eine Vorrichtung (10) zur Messung des Quecksilbergehalts in einem Gas umfassend:
- eine Lichtquelle (12) zur Aussendung der Quecksilberspektrallinien entlang einer optischen Achse (14),
- ein von einem Magneten (15) erzeugtes Magnetfeld, das am Ort der Lichterzeugung senkrecht zur optischen Achse ausgerichtet ist, zur Erzeugung der σ+, σ- und π polarisierten Zeeman Komponenten der Spektrallinien im Lichtstrahl,
- eine optische Trennvorrichtung (22) zum Trennen der Zeeman Komponenten,
- eine Messzelle (30) für das zu messende Gas,
- einen Lichtempfänger (34) und
- eine Auswerteeinheit (36) zur Bestimmung der Quecksilberkonzentration in dem Gas anhand der auf den Lichtempfänger auftreffenden Lichtmenge.
Um eine verbesserte Vorrichtung zur Messung des Quecksilbergehaits in einem Gas und ein entsprechendes Verfahren bereitzustellen, mit dem insbesondere präzisere und empfindlichere Hg-Konzentrationsmessungen möglich sind, wird vorgeschlagen, dass die Lichtquelle Quecksilber mit natürlicher Isotopenverteilung enthält und die Trennvorrichtung einen photoelastischen Modulator (24-1) umfasst.

## Beschreibung

Die Erfindung betrifft eine Vorrichtung zur Messung des Quecksilbergehalts in einem Gas nach dem Oberbegriff des Anspruchs 1 sowie ein entsprechendes Verfahren.

Aus der US 3,914,054 ist eine gattungsgemäße Vorrichtung zur Messung der Quecksilberkonzentration in einem Gas bekannt. Diese Vorrichtung weist eine elektrodenlose Quecksilberlampe als Lichtquelle auf, von der die Spektrallinien des isotopenreinen ¹⁹⁹Hg entlang einer optischen Achse ausgesandt werden. Die Lichtquelle befindet sich in einem Magnetfeld, so dass die σ+, σ- und Π polarisierten Zeeman Komponenten der Spektrallinie erzeugt werden (transversaler Zeeman Effekt). Das so erzeugte Licht wird durch eine Absorptionszelle geführt und in einer danach angeordneten optischen Trennvorrichtung werden die Zeeman Komponenten getrennt. Die optische Trennvorrichtung umfasst einen Strahlteiler, so dass der eine Teilstrahl unmittelbar auf einen Fotodetektor geführt ist und der andere Teilstrahl eine Quecksilberabsorptionszelle durchläuft, in der die unverschobene Spektrallinie, also die Π Komponente, absorbiert wird, so dass nur die verschobenen σ+ und σ- Komponenten auf einen zweiten Fotodetektor gelangen. Durch entsprechende Differenzbildung und Auswertung der an beiden Fotodetektoren gemessenen Intensitäten kann auf die Absorption in der Quecksilber-Messzelle und damit auf die Quecksilberkonzentration des zu messenden Gases geschlossen werden.

Ein wesentlicher Nachteil dieser bekannten Vorrichtung besteht darin, dass die Lichtquelle mit isotopenreinem Quecksilber arbeitet, was nicht nur kostenaufwändig ist, sondern auch die Verfügbarkeit eine solche Lichtquelle stark minimiert, da es weltweit nur wenige Hersteller von isotopenreinen Quecksilberlampen gibt. Ein weiterer wesentlicher Nachteil besteht darin, dass das Referenzlicht, also die σ+ und σ- Zeeman Komponenten, die in der Messzelle nicht absorbiert werden und als Referenz dienen, in der optischen Trennvorrichtung auf einem ersten separaten optischen Weg (Referenzpfad) geführt sind und das Messlicht auf einem zweiten optischen Weg (Messpfad). Durch die Trennung mit dem Strahlteiler in Mess- und Referenzpfad geht Intensität verloren, so dass insbesondere das Signal-Rausch Verhältnis ungünstig ist. Weiter ist nachteilig, dass das Referenzlicht eine zusätzliche Absorptionszelle zur Entfernung der π Komponente durchlaufen muss, was die Intensität des Referenzlichts weiter reduziert. Des Weiteren ist in der Realität nicht immer gewährleistet, dass eine vollständige Absorption erfolgt, so dass fehlerhafte Ergebnisse auftreten können. Ein weiterer Nachteil der Trennung von Mess- und Referenzpfad ist, dass diese möglicherweise unterschiedlichen Bedingungen, wie beispielsweise unterschiedlichen Temperaturen, ausgesetzt sind, so dass ein unterschiedliches Temperaturverhalten zu weiteren Fehlern kann. Dass gilt besonders bei Quecksilbermessungen, wenn man bedenkt, dass die Messzelle auf sehr hohe Temperaturen (bis zu 1000° C) aufgeheizt ist.

Ausgehend von diesem Stand der Technik ist es Aufgabe der Erfindung, eine verbesserte Vorrichtung zur Messung des Quecksilbergehalts in einem Gas und ein entsprechendes Verfahren bereitzustellen, mit dem insbesondere die vorgenannten Nachteile vermieden werden können und präzisere und empfindlichere Hg-Konzentrationsmessungen möglich sind.

Diese Aufgabe wird gelöst durch eine Vorrichtung mit den Merkmalen des Anspruchs 1 und ein Verfahren mit den Merkmalen des Anspruchs 7.

Die erfindungsgemäße Vorrichtung zur Messung des Quecksilbergehalts in einem Gas umfasst:
- eine Lichtquelle zur Aussendung der Quecksilberspektrallinien entlang einer optischen Achse,
- ein von einem Magneten erzeugtes Magnetfeld, das am Ort der Lichterzeugung senkrecht zur optischen Achse ausgerichtet ist, zur Erzeugung der σ+, σ- und π polarisierten Zeeman Komponenten der Spektrallinien im Lichtstrahl,
- eine optische Trennvorrichtung zum Trennen der Zeeman Komponenten,
- eine Messzelle für das zu messende Gas,
- einen Lichtempfänger und
- eine Auswerteeinheit zur Bestimmung der Quecksilberkonzentration in dem Gas anhand der auf den Lichtempfänger auftreffenden Lichtmenge.

Erfindungsgemäß enthält die Lichtquelle Quecksilber mit natürlicher Isotopenverteilung und die Trennvorrichtung umfasst einen photoelastischen Modulator.

Da die Lichtquelle Quecksilber in der natürlichen Isotopenverteilung aufweist und kein isotopenreines Quecksilber, ist eine solche Lichtquelle erheblich kostengünstiger herzustellen. Verunreinigungen, die bei einer isotopenreinen Lichtquelle störend wären, sind unerheblich. Die Verfügbarkeit einer solchen Lichtquelle ist erheblich verbessert, da keine Beschränkung auf nur wenige Hersteller besteht.

Eine weitere erhebliche Verbesserung betrifft die Trennvorrichtung, die jetzt als wesentliches Element einen photoelastischen Modulator umfasst, so dass eine Aufteilung in einen Mess- und einen Referenzpfad durch einen Strahlteiler nicht notwendig ist und somit Intensität gewonnen werden kann zur Verbesserung des Signal-zu-Rausch Verhältnisses. Außerdem stellt das Referenzlicht eine zuverlässigere Referenz dar, wenn es auf dem selben optischen Weg zu dem selben Lichtempfänger gelangt, als wenn eine Trennung in Messpfad und Referenzpfad vorläge und verschiedene Direktoren für das Messlicht und das Referenzlicht eingesetzt würden wie im Stand der Technik. Die Messergebnisse sind daher zuverlässiger, genauer und die Vorrichtung hat eine höhere Nachweiswahrscheinlichkeit.

Trotz der Verwendung von natürlichem Quecksilber bleibt der Vorteil erhalten, den transversalen Zeeman-Effekt auszunutzen, nämlich in der gleichen Lichtquelle sowohl das Messlicht (π Komponente) als auch das Referenzlicht (σ+ und σ-Komponenten) zu erzeugen, wobei Mess- und Referenzlicht vorteilhafterweise spektral sehr nahe beieinander liegen. Dadurch wird sowohl auf der höherenergetischen Seite als auch auf der niederenergetischsten Seite des Messlichts eine Referenz erhalten, so dass Querempfindlichkeiten deutlich reduziert sind. Selbst Störungen, die wellenlängenabhängig sind, haben deswegen keinen größeren Einfluss.

Vorteilhafterweise sind die optische Trennvorrichtung und die Messzelle so angeordnet, dass das Licht der Lichtquelle erst die optische Trennvorrichtung und danach die Messzelle durchsetzt.

In Weiterbildung der Erfindung ist der photoelastische Modulator kombiniert mit einem Polarisator und wird mit einer modulierten Spannung einer bestimmten Frequenz beaufschlagt, wodurch eine zeitliche Trennung der Zeeman Komponenten erhalten wird und zwar mit einer Frequenz, die der Ansteuerung des photoelastischen Modulators entspricht. Mit dieser Frequenz wird in dieser Weiterbildung gleichzeitig ein Lock-In Verstärker getriggert und das Signal des Lichtempfängers dem Lock-In Verstärker zugeführt. Das Messlicht und das Referenzlicht durchsetzen dann die Messzelle nahezu gleichzeitig und am selben Ort, so dass das Referenzlicht eine optimale Referenz darstellt, wodurch ebenfalls genauere Messergebnisse erhalten werden.

Damit das Referenzlicht deutlich von dem Messlicht spektral getrennt ist, ist das Magnetfeld am Ort der Lichtquelle so stark, dass die Zeeman Komponenten des natürlichen Quecksilbers spektral getrennt sind. Insbesondere beträgt das Magnetfeld am Ort der Lichtquelle ca. 1 bis 1,5 Tesla. Dabei muss darauf geachtet werden, dass das Magnetfeld nicht nur ausreichend stark, sondern auch möglichst homogen ist, damit neben der spektralen Trennung auch eine ausreichende zeitliche Trennung der Zeeman Komponenten gewährleistet ist.

Vorteilhafterweise ist der photoelastische Modulator als λ/2 Schwinger ausgebildet. Ein solcher ist grundsätzlich aus der DE 4314535 C2 bekannt und hat die besonderen Vorteile, dass er eine kleine Bauform aufweist, kostengünstig ist und in einfacher Weise mit einem Piezo-Kristall zu Resonanzschwingungen angeregt werden kann, wobei die Anregung über einen einfachen Pick-up Piezo geregelt werden kann.

In einer besonders vorteilhaften Ausführungsform ist die Lichtquelle als elektrodenlose Gasentladungsröhre ausgebildet, deren Elektroden als flache Scheiben mit zentraler Öffnung ausgebildet sind, in deren Öffnungen die Entladungsröhre gehalten ist. Es hat sich gezeigt, dass eine solche Ausbildung der Elektroden zu einer erheblich geringeren Schwärzung auf der Innenseite der Gasentladungsröhre führt, also die Lebensdauer der Entladungsröhre erheblich verlängert ist.

Das erfindungsgemäße Verfahren zum Betrieb einer solchen Vorrichtung umfasst die Schritte:
- Erzeugen eines entlang einer optischen Achse ausgerichteten Lichtstrahls, der die Spektrallinien von Quecksilber mit natürlicher Isotopenverteilung enthält,
- Erzeugen der σ+, σ- und Π polarisierten Zeeman Komponenten der Spektrallinien mit einem Magnetfeld,
- Trennen der Zeeman Komponenten mittels einer Kombination von photoelastischem Modulator und Polarisator,
- Führen des Lichtstrahls durch das zu messende Gas,
- Detektieren des Lichtstrahls nach Durchtritt durch das Gas,
- Auswerten der Intensität des Lichtstrahls in Abhängigkeit der Zeit und
- Bestimmen der Quecksilberkonzentration.

Die Vorteile des erfindungsgemäßen Verfahrens wurden bereits oben beschrieben.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung einer erfindungsgemäßen Vorrichtung;
- Fig. 2: die Lichtquelle der erfindungsgemäßen Vorrichtung in schematischer aber etwas detaillierterer Ansicht;
- Fig. 3: Teile der Lichtquelle;
- Fig. 4: eine weitere detailliertere Darstellung der Lichtquelle;
- Fig. 5: ein Quecksilberspektrum der Lichtquelle;
- Fig. 6: eine Darstellung von einzelnen Schritten des erfindungsgemäßen Verfahrens.

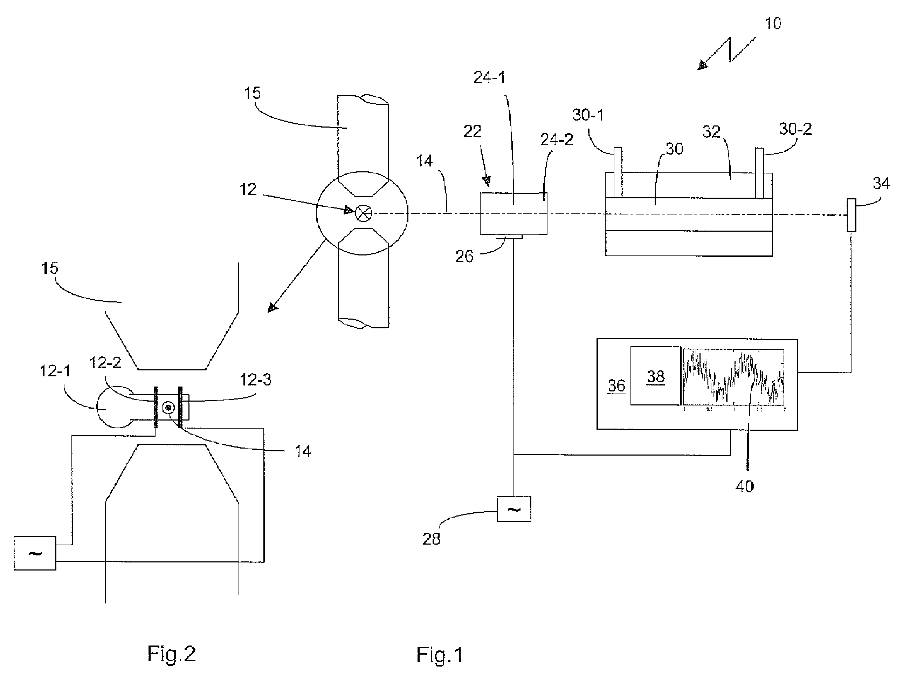

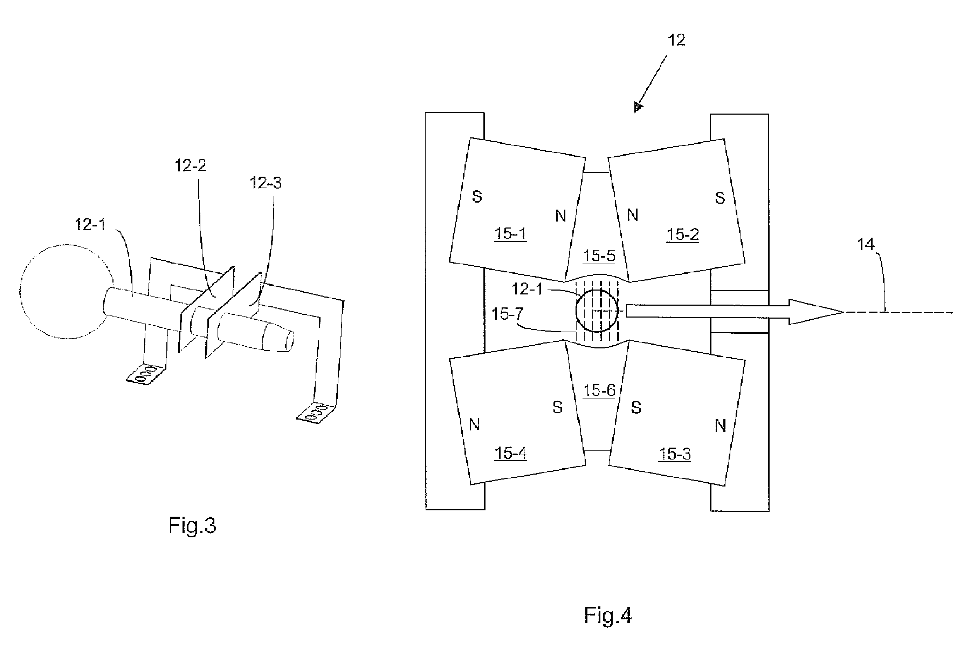

Eine Vorrichtung 10 zur Messung des Quecksilbergehalts in einem Gas, wie sie schematisch in Fig. 1 dargestellt ist, weist eine Lichtquelle 12 zur Aussendung von Quecksilberspektrallinien entlang einer optischen Achse 14 auf. Die Lichtquelle 12, die in Fig. 2 detaillierter aber immer noch schematisch dargestellt ist, ist als elektrodenlose Gasentladungslampe ausgebildet und umfasst eine Entladungsröhre 12-1, in der eine Gasentladung brennt. Des Weiteren enthält die Gasentladungsröhre 12-1 einen Quecksilbervorrat, so dass in der Gasentladung die Quecksilberspektrallinien entstehen. Bei dem Quecksilber handelt es sich um Quecksilber mit einer natürlichen Isotopenverteilung. Die Gasentladung wird gezündet und aufrechterhalten durch zwei Elektroden 12-2 und 12-3, die außerhalb der Entladungsröhre 12-1 angeordnet sind und bevorzugt als flache Scheiben mit zentraler Öffnung ausgebildet sind, wobei in den Öffnungen die Entladungsröhre12-1 gehalten ist, wie in Fig. 3 dargestellt. In Fig. 2 ist die Lichtquelle so dargestellt, dass die optische Achse 14 senkrecht zur Zeichenebene liegt.

Die Lichtquelle 12 befindet sich in einem möglichst homogenen Magnetfeld, das von einem Magneten 15 erzeugt wird und das am Ort der Lichterzeugung senkrecht zur optischen Achse ausgerichtet ist. Dadurch werden aufgrund des Zeeman-Effektes die σ+, σ- und die π polarisierten Zeeman Komponenten der Spektrallinien erzeugt.

Damit die Aufspaltung der Spektrallinien groß genug ist und die Spektrallinien scharf bleiben, also an jedem Ort in der Lampe um den gleichen Betrag spektral verschoben werden, muss ein ausreichend starkes und homogenes Magnetfeld erzeugt werden. Dafür ist der Magnet 15 in besonderer Weise ausgebildet, wie dies in Fig. 4 dargestellt ist. Der Magnet 15, der das homogene Magnetfeld erzeugt, ist insgesamt aus vier einzelnen Magneten 15-1 bis 15-4 aufgebaut, so dass ein Nordpol auf einer Seite der Gasentladungsröhre 12-1 angeordnet ist (in Fig. 4 oberhalb der Gasentladungsröhre) und ein Südpol auf der gegenüberliegenden Seite (in Fig. 4 unterhalb der Gasentladungsröhre) angeordnet ist. Der Nordpol des Magneten 15 ist dann durch die beiden Teilmagnete 15-1 und 15-2 gebildet, deren Nordpole einander gegenüberliegenden. In entsprechender Weise ist der Südpol des Magneten 15 gebildet durch die beiden Südpole der Teilmagnete 15-3 und 15-4. Zwischen den gegenüberliegenden beiden Nordpolen der Teilmagnete 15-1 und 15-2 sowie zwischen den gegenüberliegenden Südpolen der Teilmagnete 15-3 und 15-4 ist jeweils ein Spalt gebildet, der sich zur Gasentladungsröhre 12-1 hin weitet. Beide Spalte sind bevorzugt jeweils mit einem Eisenkern 15-5 und 15-6 ausgefüllt, wobei die Form der Enden der Eisenkerne, die der Gasentladungsröhre 12-1 zugewandt sind, in dargestelltem Querschnitt konkav ausgebildet sind. Durch diese Ausführungsform des Magneten 15 mit seinen Teilmagneten und den Eisenkernen kann ein besonders homogenes Magnetfeld am Ort der Gasentladung, das durch gestrichelte Linien 15-7 angedeutet ist, erzeugt werden.

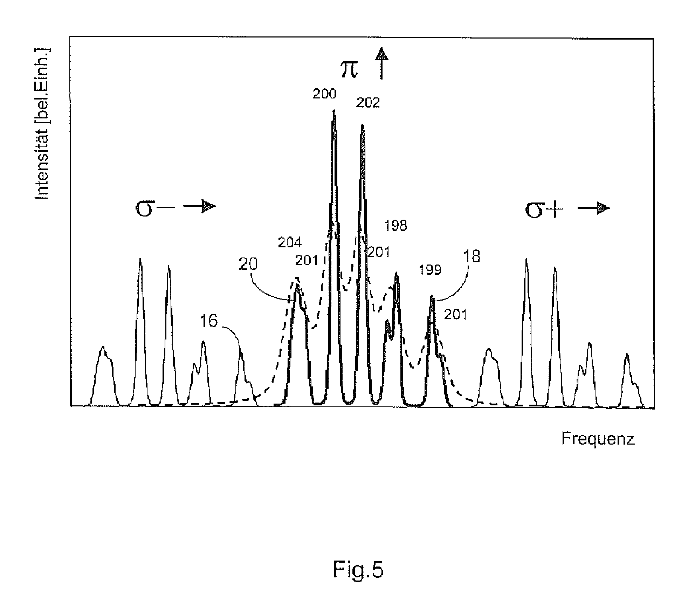

Fig. 5 zeigt ein von der Quecksilbergasentladungslampe 12 erzeugtes Spektrum. Die Spektrallinien, die fetter gedruckt sind, entsprechen der Π Komponente, wobei die einzelnen Spektrallinien der Π Komponente den verschiedenen Übergängen der verschiedenen Isotope entsprechen. Die einzelnen Linien sind durch die jeweilige Massenzahl der Isotope gekennzeichnet. Zu höheren Frequenzen hin liegen die Spektrallinien der σ+ Komponente und zu niedrigeren Frequenzen hin die Spektrallinien der σ- Komponente. Das Magnetfeld ist am Ort der Gasentladung so stark, dass die spektralen Verteilungen der σ+ und σ- Komponente sich nicht mit der Verteilung der π Komponente überschneiden. Typischerweise beträgt das Magnetfeld dafür etwa 1 bis 1,5 Tesla. Das bedeutet, dass beispielsweise die Spektrallinie von ¹⁹⁹Hg der σ- Komponente, die mit der Bezugsziffer 16 gekennzeichnet ist und die der Spektrallinie mit der höchsten Energie der π Komponente entspricht, die mit der Bezugsziffer 18 gekennzeichnet ist, soweit zu niedrigeren Frequenzen hin verschoben ist, dass sie deutlich getrennt ist von der Spektrallinie der π Komponente, die mit der Bezugsziffer 20 gekennzeichnet ist und der Spektrallinie mit niedrigster Energie der π Komponente entspricht, also der Spektrallinie von ²⁰⁴Hg. Die gestrichelte Linie in Fig. 5 zeigt die natürliche Verteilung von Hg bei Normaldruck und etwa 1000° C, wie es in der unten beschriebenen Messzelle vorzufinden ist.

Wie weiter unten erläutert wird, ist die ausreichende Trennung deswegen wichtig, weil die π Komponente letztendlich die Messgröße liefert, da die unverschobene π Komponente absorbiert wird und die verschobenen σ Komponenten eine Referenzgröße bilden, da die verschobenen Spektralkomponenten nicht absorbiert werden, wie das prinzipiell bereits aus dem Stand der Technik (US 3,914,054) bekannt ist.

Weiter weist die Vorrichtung 10 eine optische Trennvorrichtung 22 auf, mit der die Zeeman Komponenten getrennt werden, wie weiter unten noch im Einzelnen erläutert. Die optische Trennvorrichtung 22 weist als wesentliches Element einen photoelastischen Modulator 24-1 auf, der von einem Piezo 26 zu Resonanzschwingungen angeregt wird, wozu der Piezo 26 von einer Wechselspannung mit bestimmter Frequenz beaufschlagt ist, die durch eine Spannungsversorgungsvorrichtung 28 erzeugt wird. Bevorzugt ist der photoelastische Modulator als λ/2 Schwinger ausgebildet, der grundsätzlich aus dem Stand der Technik (DE 4314535 C2) bekannt ist. Dem photoelastischen Modulator 24-1 ist ein Polarisator 24-2 nachgeordnet.

Weiter weist die Vorrichtung 10 eine Messzelle 30 auf, in der das zu messende Gas mit der Quecksilberverunreinigung, dessen Konzentration gemessen werden soll, enthalten ist. Das Gas kann beispielsweise über einen Zulauf 30-1 und einen Ablauf 30-2 der Messzelle 30 zugeführt werden. Die Messzelle 30 weist in der Regel ein Eintritts- und ein Austrittsfenster auf, so dass das Licht die Messzelle 30 durchleuchten kann. Die Messzelle 30 weist eine Heizung 32 auf, die das Messgas auf sehr hohe Temperaturen, beispielsweise ca. 1000° C, aufheizen kann, um das Quecksilber ungebunden im elementaren Zustand, also atomar, in der Gasphase für die Absorptionsmessung vorliegen zu haben.
Weiter weist die Vorrichtung 10 einen Lichtempfänger 34 auf, der das Licht der Lichtquelle, das den Modulator 24 und die Messzelle 30 durchlaufen hat, in ihrer Intensität misst. Das Signal des Lichtempfängers 34 wird einer Auswerteeinheit 36 zugeführt, so dass letztendlich die Quecksilberkonzentration des Gases in der Messzelle 30 bestimmt werden kann. Dazu umfasst die Auswerteeinheit 36 einen Lock-In Verstärker 38, der durch die Spannungsversorgung 28 getriggert wird.

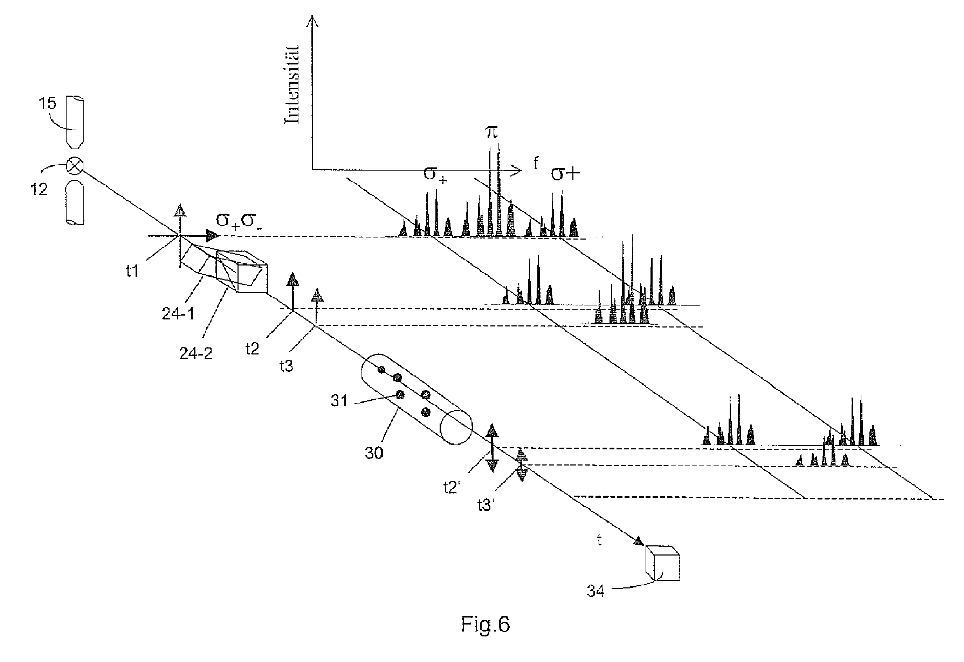

Im Folgenden wird die Funktionsweise der Vorrichtung 10, also ein Verfahren zum Betrieb der Vorrichtung 10 zum Bestimmen des Quecksilbergehaltes des Gases, im Einzelnen erläutert. Dazu wird insbesondere Bezug genommen auf die Fig. 6, in der anhand einer Zeitachse t einzelne der Verfahrensschritte dargestellt sind.

Das in der Lichtquelle 12 erzeugte Licht enthält die Zeeman Komponenten der Quecksilberspektrallinien entsprechend Fig. 5, wie dies bereits erläutert wurde. Zum Zeitpunkt t1 liegt also dieses vollständige Spektrum vor, bestehend aus der linear polarisierten π Komponenten und den senkrecht dazu polarisierten σ+ und σ- Komponenten.

Wenn das Licht den photoelastischen Modulator 24-1 durchläuft, werden aufgrund der doppelbrechenden Eigenschaften des Modulators 24-1 die linear polarisierte π Komponente anders beeinflusst, als die senkrecht dazu polarisierten σ+ und σ-Komponenten. Diese unterschiedliche Beeinflussung erfolgt im Rhythmus der angelegten Wechselspannung, die durch die Spannungsversorgung 28 bereitgestellt wird. In Kombination des photoelastischen Modulators 24-1 mit dem Polarisator 24-2 wird einerseits die Polarisation der σ Komponenten gedreht und zu bestimmten Zeiten t2 nur die σ+ und σ- Komponenten durchgelassen und zu bestimmten Zeiten t3 nur die π Komponente. Somit erfolgt in der optischen Trennvorrichtung 22, bestehend aus photoelastischem Modulator 24-1 und Polarisator 24-2, eine zeitliche Auftrennung der π Komponenten einerseits und σ+ und σ- Komponenten andererseits.

Danach durchläuft das Licht die Messzelle 30 mit den darin enthaltenen Quecksilberatomen, die in Fig. 6 mit der Bezugsziffer 31 angedeutet sind. Die unverschobenen Spektrallinien der π Komponente erfahren in der Messzelle 30 eine Absorption an den Quecksilberatomen, wohingegen die verschobenen σ+ und σ- Komponenten keine Absorption aufgrund der Energieverschiebung erfahren, so dass das Licht dieser Linien als Referenzlicht dienen kann.

Schließlich wird das Licht auf dem Lichtempfänger 34 empfangen und dem Lock-In Verstärker 38 zugeführt, der mit der dem photoelastischen Modulator 24 zugeführten Wechselspannung getriggert ist. Im Ergebnis wird dann über den Lock-In Verstärker ein Signal erhalten, wie dies qualitativ in Fig. 1 mit der Bezugsziffer 40 gezeigt ist. Der Lichtempfänger 34 empfängt also abwechselnd Referenzlicht und den nicht absorbierten Teil des Messlichts mit der Frequenz der Modulatorsteuerspannung, so dass die Differenz hiervon, also die Amplitude der Kurve 40 ein Maß für die Absorption in der Messzelle 30 ist, und damit ein Maß für die Quecksilberkonzentration, so dass aus diesem Signal sich die Konzentration des Quecksilbers in dem zu untersuchenden Gas bestimmen lässt.

## Patentansprüche

1. Vorrichtung zur Messung des Quecksilbergehalts in einem Gas,
- mit einer Lichtquelle zur Aussendung der Quecksilberspektrallinien entlang einer optischen Achse,
- mit einem von einem Magneten erzeugten Magnetfeld, das am Ort der Lichterzeugung senkrecht zur optischen Achse ausgerichtet ist, zur Erzeugung der σ+, σ- und π polarisierten Zeeman Komponenten der Spektrallinien im Lichtstrahl,
- mit einer optischen Trennvorrichtung zum Trennen der Zeeman Komponenten,
- mit einer Messzelle für das zu messende Gas,
- mit einem Lichtempfänger und
- mit einer Auswerteeinheit zur Bestimmung der Quecksilberkonzentration in dem Gas anhand der auf den Lichtempfänger auftreffenden Lichtmenge,
**dadurch gekennzeichnet, dass** die Lichtquelle Quecksilber mit natürlicher Isotopenverteilung enthält und dass die Trennvorrichtung einen photoelastischen Modulator umfasst.

2. Vorrichtung nach Anspruch 1, **dadurch gekennzeichnet, dass** die optische Trennvorrichtung und die Messzelle so angeordnet sind, dass das Licht der Lichtquelle erst die optische Trennvorrichtung und danach die Messzelle durchsetzt.

3. Vorrichtung nach einem der vorhergehenden Ansprüche, **dadurch gekennzeichnet, dass** der photoelastische Modulator mit einer modulierten Spannung einer bestimmten Frequenz beaufschlagt ist und zusammen mit einem Polarisator dadurch eine zeitliche Trennung der Zeeman Komponenten erhalten ist und das Signal des Lichtempfängers einem Lock-In Verstärker zugeführt ist.

4. Vorrichtung nach einem der vorhergehenden Ansprüche, **dadurch gekennzeichnet, dass** das Magnetfeld am Ort der Lichtquelle so stark ist, dass die Zeeman Komponenten des natürlichen Quecksilbers spektral getrennt sind, insbesondere 1 bis 1,5 Tesla beträgt.

5. Vorrichtung nach einem der vorhergehenden Ansprüche, **dadurch gekennzeichnet, dass** der photoelastische Modulator als λ/2 Schwinger ausgebildet ist.

6. Vorrichtung nach einem der vorhergehenden Ansprüche, **dadurch gekennzeichnet, dass** die Lichtquelle als elektrodenlose Gasentladungsröhre ausgebildet ist, deren Elektroden als flache Scheiben mit zentraler Öffnung ausgebildet sind, in deren Öffnungen die Entladungsröhre gehalten ist.

7. Verfahren zum Betrieb einer Vorrichtung nach einem der vorhergehenden Ansprüche mit den Schritten:
- Erzeugen eines entlang einer optischen Achse ausgerichteten Lichtstrahls, der die Spektrallinien von Quecksilber mit natürlicher Isotopenverteilung enthält,
- Erzeugen der σ+, σ- und Π polarisierten Zeeman Komponenten der Spektrallinien mit einem Magnetfeld,
- Trennen der Zeeman Komponenten mittels einer Kombination von photoelastischem Modulator und Polarisator,
- Führen des Lichtstrahls durch das zu messende Gas,
- Detektieren des Lichtstrahls nach Durchtritt durch das Gas,
- Auswerten der Intensität des Lichtstrahls in Abhängigkeit der Zeit und
- Bestimmen der Quecksilberkonzentration.

8. Verfahren nach Anspruch 7, **dadurch gekennzeichnet, dass** der photoelastische Modulator mit einer modulierten Spannung einer bestimmten Frequenz beaufschlagt wird und dadurch eine zeitliche Trennung der Zeeman Komponenten erfolgt und dass das Signal des Lichtempfängers im Lock-In Verfahren ausgewertet wird.
